# EUROPEAN PATENT SPECIFICATION

(11) **EP 1 785 075 B1**
(45) Date of publication and mention of the grant of the patent: **07.07.2010**
(21) Application number: 06123594.1
(22) Date of filing: 07.11.2006
(51) Int. Cl.: A47J 37/04, A21B 1/48

(54) **Machine for the heating and cooking of food products**
Gerät zum Erhitzen und Kochen von Nahrungsmitteln
Machine pour chauffer et cuire des aliments

(30) Priority: 11.11.2005 IT VI20050299
(43) Date of publication of application: 16.05.2007
(73) Proprietor: Sirman S.p.A., 35010 Campo San Martino (PD) (IT)
(72) Inventor: Marzaro, Luca, 35010, Curtarolo (Padova) (IT); Zambon, Stefano, 35010, Campo San Martino (Padova) (IT)
(74) Representative: Iannone, Carlo Luigi

(56) References cited:
- WO-A-00/21338
- FR-A- 1 267 228
- US-A- 3 484 087

## Description

The present invention relates, in general, to a machine for the heating and cooking of food products and, in particular, to a machine (generally called "roller") for toasting, cooking and/or heating croutons, toastlets, pizzas, potatoes, brioches and various delicacies.

The machine in question can be of the household or professional type, useful for the requirements of kitchens, hotels, restaurants, guesthouses and communities in general.

So-called "rollers", referring to machines for toasting, cooking, heating, etc. food products, such as croutons, toastlets, pizzas, potatoes, brioches and delicacies in general, have been known for some time.

These machines have an outer casing which delimits a cooking chamber, and are equipped with a moving belt which sends the food product inside the cooking chamber.

A rear outlet or second belt send the product out of the cooking chamber.

An example of known "rollers" is disclosed for example in US-A-3484087.

These machines notoriously have the problem of cleaning, both the moving belt and internal organs and also the cooking chamber itself.

During its passage inside the cooking chamber, the food product does in fact tend, for various reasons linked to the consistency of the dough and movement of the belt, to leave residues, such as breadcrumbs, organic components, oil, etc.

These residues, especially if they remain entrapped inside the cooking chamber or attached to the moving organs (such as the moving belt) are extremely difficult to remove.

Furthermore, the above residues tend, with time, to carbonize, as they are exposed to heat, and consequently burn making the further use of the machine dangerous.

A food cooking apparatus having the technical features of the preample of the appended claim 1 and that allows, in particular, a quick removal of one of the assemblies for cleaning, maintenance and/or belt replacement is disclosed in the prior art document WO 00/21338 A.

However, the capacity of said cooking apparatus is necessarily limited to the area of the stationary food support surface and, hence, there is a need for providing a more versatile cooking machine, which can be used, for example, during periods of peak demand in a restaurant setting.

A general objective of the present invention is therefore to solve the drawbacks mentioned above and, in particular, to provide a machine for the heating and cooking of food products which can be easily cleaned, both externally and internally.

A further objective of the present invention is to provide a machine for the heating and cooking of food products which allows all the internal organs to be removed, thus also facilitating the cleaning of the cooking chamber.

Another objective of the present invention is to provide a machine for the heating and cooking of food products which is particularly effective, comfortable, safe and practical to use, with respect to the heating and cooking machines of the traditional type.

These and other objectives are achieved in a machine for the heating and cooking of food products, according to claim 1 enclosed.

Further technical characteristics of the machine are indicated in the other dependent claims enclosed.

The structural and functional characteristics of the present invention and its advantages with respect to the known art will appear even more evident from the following description, referring to the enclosed drawings, in which:
- figure 1 shows a first axonometric view of the heating and cooking machine for food products, according to the present invention;
- figure 2 is a second axonometric view of the heating and cooking machine, as per figure 1, with one of the loading and unloading belts of the food products partially extracted from inside the cooking chamber;
- figure 2A shows a mechanical detail, enlarged, of the machine as per figure 2, according to the present invention;

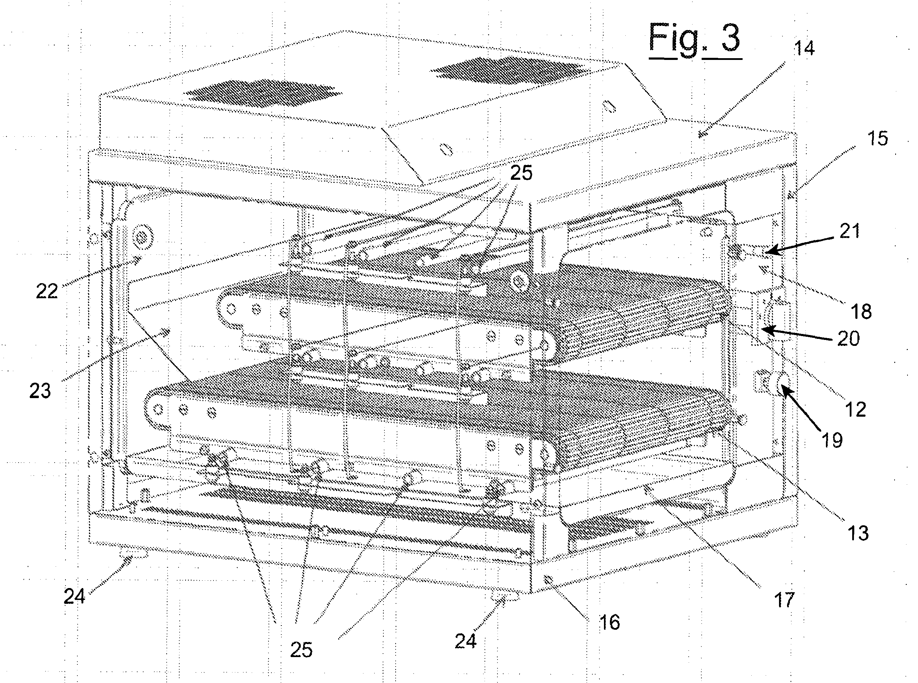

- figure 3 shows a further axonometric view of the heating and cooking machine for food products, according to the present invention, with the outer casing partially removed.

With reference to the above figures, the heating and cooling machine for food products, such as croutons, toastlets, pizzas, potatoes, brioches and various delicacies, essentially consists of an outer casing 10, which encloses a cooking chamber 11, a moving belt 12 used for the introduction of the food products into the cooking chamber 11 and a collection belt 13.

The outer casing 10 and belts for the toasting 12, 13 are completely made of stainless steel, in order to guarantee hygiene and make them acid- and salt-proof, and also ensure an optimum resistance to oxidation.

The cooking chamber 11 is coated with insulating material, in order to avoid useless temperature dispersions, deterioration of the electric components used and burns on the outer surfaces.

Furthermore, the heating elements 25 consist of quartz tubes which can be lit modularly for an easier regulation of the heating power.

Finally, the machine can be equipped with a self-ventilated motor, a control compartment equipped with one or more fans, suitable for protecting the electric components from overheating, and a speed variator, which allows a more personal use, on the basis of the food requirements and desired result, in addition to loading and unloading chutes and/or a collection tray of the cooked and/or heated product.

In particular, the machine comprises an upper lid 14, side lids 15, a lower cover 16, equipped with feet 24, a collection tray 17, a rotating belt 12 and an unloading belt 13.

Furthermore, a speed variator 19, a commutative sequential switch 20 and one or more warning lamps 21 are available on the front panel 18.

Behind the machine there is also an extractable panel 22, complete with a chute 23, and a supply cable (not shown in the enclosed figures).

The machine can be positioned on a surface which should take in account the supporting dimensions and consequently be sufficiently ample, well leveled, dry, smooth, sturdy, stable and at a height of about 80 cm from the ground.

The machine should also be installed in an aerated environment and can also be positioned close to walls, provided they have a good heat resistance.

Finally, the machine can be used with the rear door 22 closed, so that the product falls directly onto the collection belt 13, by means of the edge 23 (this arrangement is generally used for toasted bread), or open, so that the product is discharged on the same rear door 22 (this arrangement is generally used for the heating and/or cooking of toast, pizzas, etc.).

The presence of this reversible rear closure thus allows the products to be discharged in front of or behind the machine, also using a useful supporting plane.

According to the present invention, the heating and/or cooking machine, in particular in the version suitable for heating and/or cooking food products such as potatoes, can be additionally easily cleaned, as all the internal elements can be removed, also facilitating the cleaning of the cooking chamber 11; more specifically, the moving loading belt 12, the unloading belt 13 and the collection tray 17 can be completely dismantled from the machine for an easy and complete cleaning.

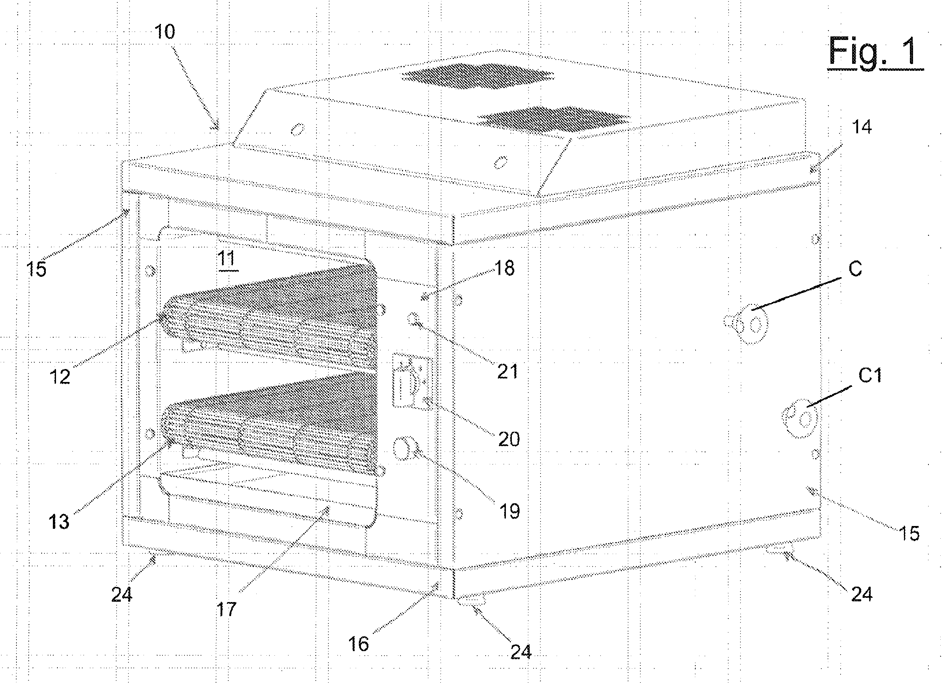

In particular, one or more of the moving loading and unloading belts 12, 13 can be produced as self-supporting elements, so that they can be easily extracted, by simply unhooking the entrainment system (as illustrated in figures 1-2 enclosed) and subsequently washed individually (also in dishwashers).

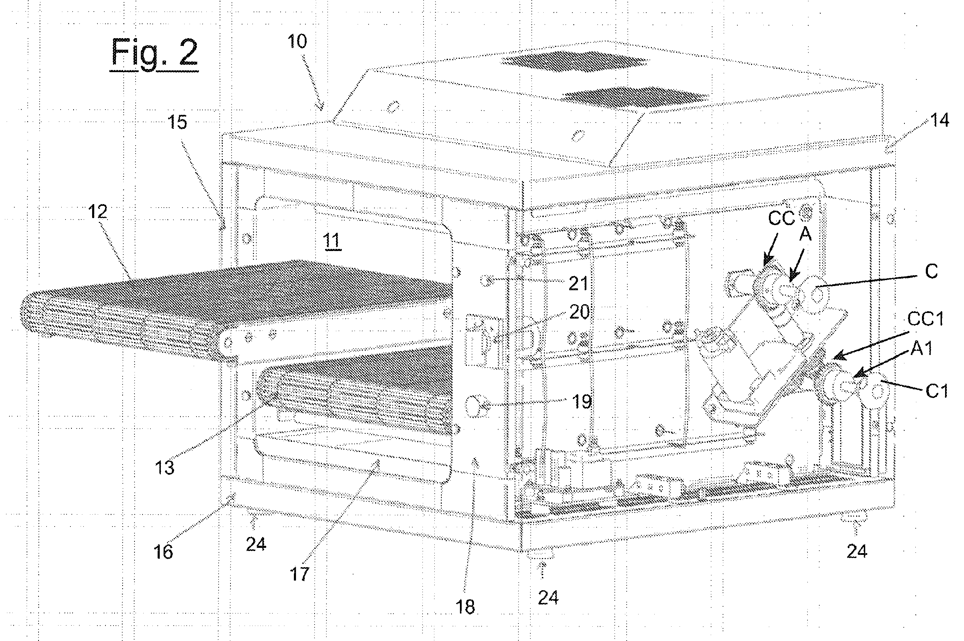

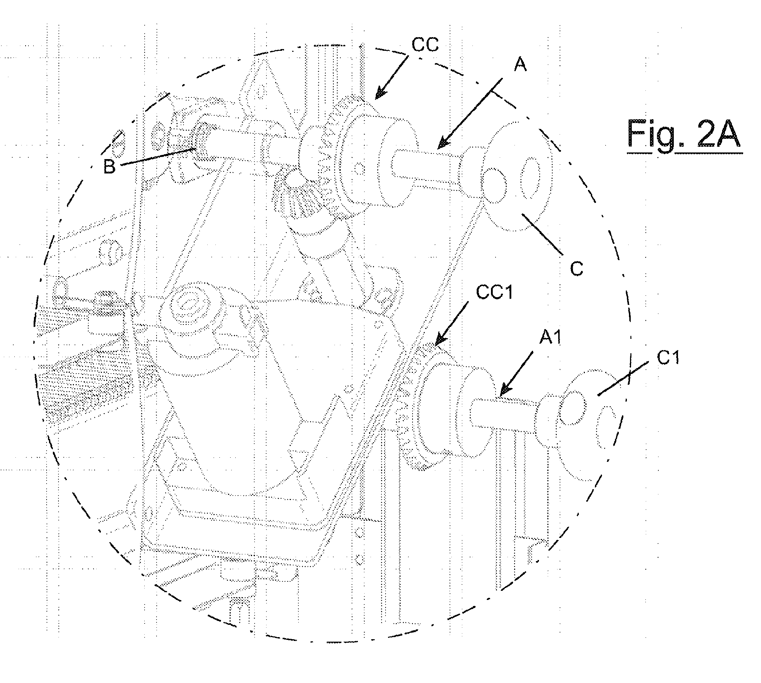

The unhooking of the entrainment system can be effected, for example, by means of a handle on the side of the machine, as illustrated in detail in figures 2 and 2A.

In particular, the entrainment shaft or pin A of the belt 13, connected to the reduction system with a conical torque CC, transmits movement to the belt 13 and keeps it hooked to the machine, and also the shaft or pin A1, connected to the conical torque reduction system CC1, transmits movement to the belt 12.

More specifically, the belt 13 is supported, inside the cooking chamber 11, by respective sliding guides, and constrained to the machine by means of the pin A.

Furthermore, the shaft A is kept in position by the spring B, which keeps the thrust of the pin towards the conical torque CC and the belt 13, so that the shaft A can slide longitudinally.

By means of the handles C and C1, situated away from the heat sources, the operator can pull the single shafts A and A1 outwardly, overcoming the force of the relative springs B, so as to release the shafts A, A1 from the relative conical torques CC, CC1 and free the belts 12, 13, which can therefore be extracted from the machine.

Finally, both the belts 12, 13 can be extracted from the cooking chamber 11 without further operations and can also be washed in dishwashers, as they are entirely made of stainless steel. The cooking chamber 11, freed from the encumbrance of the belts 12, 13 is therefore particularly smooth, with rounded edges and consequently easy to clean with a simple soaked cloth.

The characteristics of the machine for the heating and cooking of food products, object of the present invention, appear evident from the above description, as also the advantages.

Numerous other variants however can obviously be applied to the heating and cooking machine in question, within the scope of the attached claims. It is also evident that, in the practical embodiment of the invention, the materials, forms and dimensions of the details illustrated can vary according to requirements and be substituted with other technically equivalent alternatives.

## Claims

1. A machine for the heating and cooking of food products, suitable for toasting, cooking and/or heating food products in general, such as croutons, toastlets, pizzas, potatoes, brioches and various delicacies, of the type comprising an outer casing (10), made of steel, which delimits at least one cooking chamber (11), situated inside the casing (10), coated with insulating material and equipped with heating elements, and at least one moving belt (12, 13), which sends the food product inside the cooking chamber (11), wherein at least one of the moving belts (12, 13) and further organs inside the machine are easily removable facilitating the cleaning of said belts (12, 13), the internal organs of the machine and the cooking chamber (11), **characterised in that** said outer casing (10) comprises at least one extractable rear panel (22), used as a closure, so that the products are discharged onto said rear panel (22), to allow said products to be unloaded in front of or behind the machine.

2. The heating and cooking machine according to claim 1, **characterized in that** at least one first moving loading belt (12), at least one unloading belt (13) and at least one collection tray (17) of the food products can be completely dismantled from the machine to allow easy and complete cleaning.

3. The heating and cooking machine according to claim 1, **characterized in that** said moving belts (12, 13) are produced as self-supporting elements and can be easily extracted from inside the machine, thanks to an unhooking mechanism of the entrainment system, to allow the cooking chamber (11) to be smooth, free of encumbrances and easy to clean.

4. The heating and cooking machine according to claim 3, **characterized in that** said unhooking mechanism of the entrainment system can be effected by means of at least one handle (C, C1) situated outside the casing (10) of the machine.

5. The heating and cooking machine according to claim 1, **characterized in that** at least one of said belts (12, 13) is activated and constrained to the machine, by means of at least one entrainment shaft or pin (A, A1), connected to a conical torque reduction system (CC, CC1).

6. The heating and cooking machine according to claim 5, **characterized in that** said shaft or pin (A, A1) is maintained in position by at least one elastic element (B), which causes a thrust of said shaft or pin (A, A1) towards said conical torque (CC, CC1), so that the shaft or pin (A, A1) can slide longitudinally.

7. The heating and cooking machine according to claim 6, **characterized in that** said shafts or pins (A, A1) can be activated outwardly by an operator, by means of said handle (C, C1), situated away from heat sources, so as to release the shafts or pins (A, A1) from the relative conical torques (CC, CC1) and free the belts (12, 13), which can therefore be extracted from the cooking chamber (11) of the machine.

## Patentansprüche

1. Maschine zum Erwärmen und Kochen von Nahrungsprodukten, geeignet zum Toasten, Kochen und/oder Erwärmen von Nahrungsprodukten im Allgemeinen, wie beispielsweise Croutons, Toasts, Pizzas, Kartoffeln, Brioches und verschiedene Delikatessen, der Art umfassend ein äußeres Gehäuse (10), hergestellt aus Stahl, das zumindest eine Kochkammer (11) begrenzt, angeordnet in dem Gehäuse (10), beschichtet mit Isoliermaterial und ausgestattet mit Heizelementen, und zumindest ein Bewegungsband (12, 13), das die Nahrungsprodukte in die Kochkammer (11) fördert, wobei zumindest eines der Bewegungsbänder (12, 13) und weitere Organe in der Maschine leicht entfernbar sind, erleichternd das Säubern der Bänder (12, 13), der internen Organe der Maschine und der Kochkammer (11), **dadurch gekennzeichnet, dass** das äußere Gehäuse (10) zumindest ein extrahierbares hinteres Paneel (22) umfasst, verwendet als Verschluss, so dass die Produkte auf das hintere Paneel (22) ausgegeben werden, um den Produkten zu ermöglichen, vor oder hinter der Maschine entfernt zu werden.

2. Erwärmungs- und Kochmaschine gemäß Anspruch 1, **dadurch gekennzeichnet, dass** zumindest ein erstes Bewegungsladeband (12), zumindest ein Entfernungsband (13) und zumindest eine Sammelablage (13) der Nahrungsprodukte komplett von der Maschine demontiert werden kann, um ein einfaches und vollständiges Säubern zu ermöglichen.

3. Erwärmungs- und Kochmaschine gemäß Anspruch 1, **dadurch gekennzeichnet, dass** die Bewegungsbänder (12, 13) als selbsttragende Elemente hergestellt sind und einfach vom Innern der Maschine extrahiert werden können, dank eines Losmachmechanismus des Mitnahmesystems, um der Kochkammer (11) zu ermöglichen, ausgeglichen, frei von Behinderungen und einfach zu säubern zu sein.

4. Erwärmungs- und Kochmaschine gemäß Anspruch 3, **dadurch gekennzeichnet, dass** der Losmachmechanismus des Mitnahmesystems erzielt werden kann mittels zumindest eines Griffs (C, C1), angeordnet außerhalb des Gehäuses (10) der Maschine.

5. Erwärmungs- und Kochmaschine gemäß Anspruch 1, **dadurch gekennzeichnet, dass** zumindest eines der Bänder (12, 13) aktiviert und beaufschlagt wird bezüglich der Maschine mittels zumindest eines Mitnahme-Schafts oder Stabs (A, A1), verbunden mit einem Konus-Drehmomentteil-Reduktionssytem (CC, CC1).

6. Erwärmungs- und Kochmaschine gemäß Anspruch 5, **dadurch gekennzeichnet, dass** der Schaft oder Stab (A, A1) in Position gehalten wird durch zumindest ein elastisches Element (B), welches einen Druck des Schafts oder Stabs (A, A1) gen Konus-Drehmomentteil (CC, CC1) verursacht, so dass der Schaft oder Stab (A, A1) in Längsrichtung bewegbar ist.

7. Erwärmungs- und Kochmaschine gemäß Anspruch 6, **dadurch gekennzeichnet, dass** die Schäfte oder Stäbe (A, A1) auswärts aktiviert werden können durch einen Bediener mittels des Griffs (C, C1), angeordnet entfernt von Wärmequellen, um die Schäfte oder Stäbe (A, A1) von den jeweiligen Konus-Drehmomentteilen (CC, CC1) freizugeben und die Bänder (12, 13) zu befreien, welche somit von der Kochkammer (11) der Maschine extrahiert werden können.

## Revendications

1. Machine pour chauffer et cuire des produits alimentaires, appropriée pour faire griller, cuire et/ou chauffer des produits alimentaires en général, tels que des croûtons, des petits toasts, des pizzas, des pommes de terre, des brioches et divers mets raffinés, du type comprenant une enceinte externe (10), faite en acier, qui délimite au moins une chambre de cuisson (11) située à l'intérieur de l'enceinte (10), revêtue d'un matériau isolant et équipée d'éléments chauffants, et au moins une bande transporteuse (12, 13) qui entraîne le produit alimentaire à l'intérieur de la chambre de cuisson (11), où au moins l'une des bandes transporteuses (12, 13) et d'autres organes situés à l'intérieur de la machine sont aisément amovibles, ce qui facilite le nettoyage desdites bandes transporteuses (12, 13), des organes internes de la machine et de la chambre de cuisson (11), **caractérisée en ce que** ladite enceinte externe (10) comprend au moins un panneau arrière rétractable (22), utilisé comme fermeture, de sorte que les produits soient déchargés sur ledit panneau arrière (22), pour permettre le déchargement desdits produits à l'avant ou à l'arrière de la machine.

2. Machine de chauffage et de cuisson selon la revendication 1, **caractérisée en ce qu'**au moins une première bande transporteuse de chargement (12), au moins une bande de déchargement (13) et au moins un plateau collecteur (17) prévus pour les produits alimentaires, peuvent être complètement démontés de la machine pour permettre un nettoyage aisé et complet.

3. Machine de chauffage et de cuisson selon la revendication 1, **caractérisée en ce que** lesdites bandes transporteuses (12, 13) sont élaborées sous la forme d'éléments indépendants et peuvent être aisément extraites de l'intérieur de la machine grâce à un mécanisme de décrochage du système d'entraînement, afin que la chambre de cuisson (11) puisse être lisse, dégagée et aisée à nettoyer.

4. Machine de chauffage et de cuisson selon la revendication 3, **caractérisée en ce que** ledit mécanisme de décrochage du système d'entraînement peut être manipulé au moyen d'au moins une poignée (C, C1) située à l'extérieur de l'enceinte (10) de la machine.

5. Machine de chauffage et de cuisson selon la revendication 1, **caractérisée en ce qu'**au moins l'une desdites bandes (12, 13) est activée et asservie à la machine au moyen d'au moins un arbre ou broche d'entraînement (A, A1), raccordé à un système de réduction de couple conique (CC, CC1).

6. Machine de chauffage et de cuisson selon la revendication 5, **caractérisée en ce que** ledit arbre ou ladite broche (A, A1) est maintenu en position par le biais d'au moins un élément élastique (B), qui entraîne une poussée dudit arbre ou de ladite broche (A, A1) vers ledit couple conique (CC, CC1), de sorte que l'arbre ou la broche (A, A1) puisse coulisser longitudinalement.

7. Machine de chauffage et de cuisson selon la revendication 6, **caractérisée en ce que** lesdits arbres ou lesdites broches (A, A1) puissent être manipulés depuis l'extérieur par un opérateur, au moyen de ladite poignée (C, C1) située en position éloignée des sources de chaleur, de manière à libérer les arbres ou les broches (A, A1) des couples coniques relatifs (CC, CC1) et à libérer les bandes (12, 13) qui, de la sorte, peuvent être extraites de la chambre de cuisson (11) de la machine.
